# EUROPÄISCHE PATENTANMELDUNG

(11) **EP 1 849 563 A1**
(43) Veröffentlichungstag der Anmeldung: **31.10.2007**
(21) Anmeldenummer: 07015692.2
(22) Anmeldetag: 09.12.2005
(51) Int. Cl.: B25F 5/00, B23B 39/16

(54) **Werkzeugkopf für ein Elektro-Hand-Arbeitsgerät zum Schrauben und/oder Bohren**

(30) Priorität: 09.12.2004 DE 202004019047 U
(62) Teilanmeldung aus: 05026939.8
(71) Anmelder: Klein & More, 22041 Hamburg (DE)
(72) Erfinder: Friese, Hans-Joachim, 23669 Hemmelsdorf (DE)
(74) Vertreter: Glaeser, Joachim

(57) **Zusammenfassung**

Die Erfindung bezieht sich auf ein Werkzeugkopf für ein Elektro-Hand-Arbeitsgerät zum Schrauben und/oder Bohren, aufweisend in einem Gehäuse einen Elektromotor, ein Getriebe (404/401) zwischen Ausgangswelle (407/406) des Elektromotors und einem Werkzeugaufnehmer (3, 30, 6, 12, 7, 401). Ein oder zwei Werkzeugaufnehmer (3, 6 bzw. 3, 6, 30, 12 ist/sind vorgesehen, der/die von der Ausgangswelle (401) eines Planetengetriebes antreibbar ist/sind. Auf dem Stirnende der Ausgangswelle (401) ist ein Planetenrad (402) angeordnet und kämmt mit einem Sonnenradpaar (403, 405). auf dem Stirnende der Motorausgangswelle (406, 407) ist ein Planetenrad (404) angeordnet und kämmt mit dem Sonnenradpaar (403, 405).

## Beschreibung

Die Erfindung bezieht sich auf einen Werkzeugkopf für ein Elektro-Hand-Arbeitsgerät zum Schrauben und/oder Bohren.

Derartige Geräte sind als Handschrauber oder Handbohrmaschine bekannt und weisen im Wesentlichen ein trommelförmiges Gehäuse auf. Die Antriebswelle, und damit auch das eigentliche Werkzeug, sind koaxial zu diesem trommelförmigen Gehäuse ausgerichtet und dies bedingt, dass man mit dem entsprechenden Arbeitsgerät einen gewissen Abstand zu einer Wand oder dergleichen einhalten muss, eben weil die radiale Erstreckung des Gehäuses einen Mindestabstand zu einer Wand festlegt. Hinzu kommt noch, dass bei derartigen Handbohrmaschinen ein Handgriffteil mehr oder weniger radial von dem trommelförmigen Gehäuse absteht und die Möglichkeit in der Nähe einer Wand oder in einer Ecke einen Bohr- oder Schraubvorgang durchzuführen, weiterhin erschwert.

Es ist ein handgeführtes Elektrowerkzeug bekannt (DE 41 16 343 A1), bei welchem die Möglichkeit gegeben ist, vom so genannten Geradbohren auf Winkelbohren um zustellen, indem zwischen der Antriebswelle der Bohrmaschine und der Arbeitsspindel ein beliebiger Winkel zwischen 0 und 90° eingestellt werden kann. Bedingt durch das eingesetzte Winkelgetriebe ist es möglich, mit der bekannten Handbohrmaschine auch Arbeitsvorgänge relativ nah an einer Wand oder in einer Ecke durchzuführen.

Die vorliegende Erfindung will nun nicht nur die Möglichkeit schaffen, Arbeitsvorgänge in relativ kleinem Abstand zu einer Wand oder zu einer sonstigen Begrenzung ausführen zu können, sondern darüber hinaus auch mehrere Arbeitsvorgänge in relativ kurzen zeitlichen Abständen zueinander zu bewerkstelligen.

Die Einsatzmöglichkeiten eines Werkzeugkopfes sollen darüber hinausgehend auch erweitert werden, so dass nicht nur Arbeitsvorgänge in relativ kleinem Abstand zu einer Wand oder einer sonstigen Begrenzung ausgeführt werden können, sondern auch die Arbeitsrichtung des Werkzeugs in Bezug auf die Ausrichtung des Elektro-Hand-Arbeitsgeräts verstellt werden kann. Dies wird durch einen Werkzeugkopf erreicht, der ein Gehäuse, einen Elektromotor, ein Getriebe zwischen Ausgangswelle des Elektromotors und einem Werkzeugaufnehmer aufweist und dadurch geprägt ist, dass ein oder zwei Werkzeugaufnehmer vorgesehen ist/sind, der/die von der Ausgangswelle eines Planetengetriebes antreibbar ist/sind, dass auf dem Stirnende der Ausgangswelle ein Planetenrad angeordnet ist und mit einem Sonnenradpaar kämmt und dass auf dem Stirnende der Motorausgangswelle ein Planetenrad angeordnet ist und mit dem Sonnenradpaar kämmt.

Dadurch, dass zwischen dem Elektromotor und den Werkzeugaufnehmem ein Umlaufrädergetriebe, ein Differenzial- oder ein Planetengetriebe angeordnet ist, besteht die Möglichkeit, die geometrische Achse eines Werkzeuges in Bezug auf die Achse des Antriebsmotors in einem weiten Bereich eines räumlichen Winkels zu verändern. So kann beispielsweise die Spitze eines eingespannten Bohrwerkzeuges einen beliebigen Punkt auf der Innenoberfläche einer Halbkugel einnehmen. Es liegt auf der Hand, dass mit einer solchen Verstellbarkeit, die Einsatzmöglichkeiten eines Werkzeugkopfes erweitert werden können. Die Einstellbarkeit der Ausgangswelle für das Werkzeug in Bezug auf die feste Motorwelle kann über ein Umlaufrädergetriebe leicht durch verstellen des Eingriffs des einen Planetenrades in Bezug auf das Sonnenradpaar bzw. des Sonnenradpaares in Bezug auf das andere Planetenrad realisiert werden.

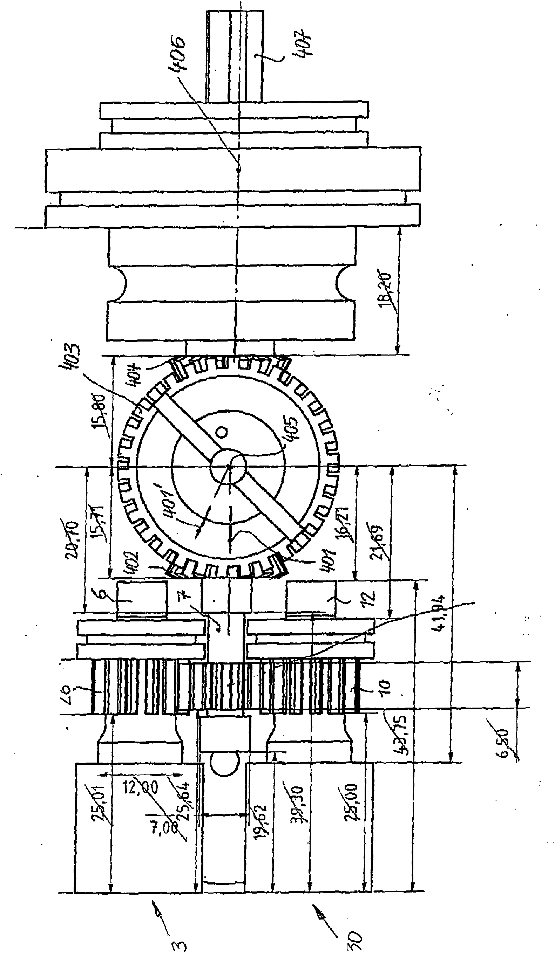

Die Erfindung wird nachstehend anhand der Zeichnung beispielsweise erläutert.

Die einzige Figur zeigt eine Längsschnittansicht durch den Werkzeugkopf und lässt das Planetengetriebe einer abgewandelten Ausführungsform der Erfindung erkennen.

In Figur ist die Ausgangswelle 407 des nicht gezeigten Motors zu erkennen. Die geometrische Achse der Ausgangswelle ist mit 406 bezeichnet. Am freien Ende der Welle 407 ist ein Planetenrad 404 angeordnet. Dieses kämmt in einem Paar Sonnenräder, von denen nur zu Folge der Schnittlegung das hintere Sonnenrad 403 zu erkennen ist. Das Sonnenrad 403 dreht sich, wenn sich die Welle 406 dreht, um eine Achse 405, die senkrecht zur Papierebene steht.

Dem Planetenrad 404 gegenüberliegend kämmt ein weiteres Planetenrad 402 mit dem Sonnenradpaar 403. Dieses Planetenrad 402 ist auf der Antriebswelle 7 am Stirnende angebracht und es ist ersichtlich, dass die Drehbewegung des Motors über die Welle 406 auf die Welle 7 übertragen wird.

In der gezeigten Darstellung ist die geometrische Achse 401 der Welle 7 fluchtend zur geometrischen Achse 406 der Motorwelle 407. Es ist ersichtlich, dass durch räumliche Trennung der beiden Sonnenräder 403 voneinander das Planetenrad 402 aus dem Eingriff mit den Sonnenrädern 403 genommen werden kann und beispielsweise in einem Winkel wieder in Eingriff gesetzt werden kann. In der Figur ist mit 401' die Situation gezeigt, wobei tatsächlich die Welle 7 in Bezug auf die Motorwelle 407 um einen gewissen Winkel verschwenkt worden ist. Auch in dieser Lage können die Drehbewegungen des Motors auf die Werkzeuge übertragen werden.

Es ist ersichtlich, dass sich eine weitere Verstellmöglichkeit der Werkzeuge in Bezug auf die geometrische Achse 406 des Motors 407 dadurch ergibt, dass die beiden Sonnenräder 403 bei feststehender Motorwelle um ihre Achse 405 gedreht werden können, in dem der Werkzeugkopf insgesamt in Bezug auf das Gehäuse bzw. die Welle 407 verschwenkt wird.

Nicht gezeigt sind die Mechanismen, die erforderlich sind, um die Verstellvorgänge, insbesondere das Ausdrücken der Zahnräder durchzuführen, da derartige Mechanismen bei Umlaufrädergetrieben bekannt sind.

## Patentansprüche

1. Werkzeugkopf für ein Elektro-Hand-Arbeitsgerät zum Schrauben und/oder Bohren, aufweisend in einem Gehäuse einen Elektromotor, ein Getriebe (404/401) zwischen Ausgangswelle (407, 406) des Elektromotors und einem Werkzeugaufnehmer (3, 30, 6, 12, 7, 401), **dadurch gekennzeichnet, dass** ein oder zwei Werkzeugaufnehmer (3, 6 bzw. 3, 6, 30, 12) vorgesehen ist/sind, der/die von der Ausgangswelle (401) eines planetengetriebes antreibbar ist/sind, dass auf dem Stirnende der Ausgangswelle (401) ein Planetenrad (402) angeordnet ist und mit einem Sonnenradpaar (403, 405) kämmt und dass auf dem Stirnende der Motorausgangswelle (406, 407) ein Planetenrad (404) angeordnet ist und mit dem Sonnenradpaar (403, 405) kämmt.
